# EUROPEAN PATENT APPLICATION

(11) **EP 4 503 160 A2**
(43) Date of publication of application: **05.02.2025**
(21) Application number: 24189995.4
(22) Date of filing: 22.07.2024
(51) Int. Cl.: H01M 4/04, H01M 10/0587

(54) **METHOD OF MANUFACTURING ELECTRICITY STORAGE DEVICE, RECORDING DEVICE, AND ELECTRICITY STORAGE DEVICE MANUFACTURING APPARATUS**

(30) Priority: 01.08.2023 JP 2023125210
(71) Applicant: Prime Planet Energy & Solutions, Inc., Chuo-ku Tokyo 103-0022 (JP)
(72) Inventor: SATO, Tetsuya, Tokyo, 103-0022 (JP)
(74) Representative: Kuhnen & Wacker Patent- und Rechtsanwaltsbüro PartG mbB

(57) **Abstract**

In an uncoated region (16a) of a current collector (16) of a lithium-ion secondary battery (10), first codes (18) are formed along a longitudinal axis thereof. A first inspection device (105) and a second inspection device (107) record inspection information in a recording device (210) while identifying the position of an active material layer (17) using the first codes (18). It is possible to retrospectively acquire the inspection information on the active material layer (17) corresponding to the position of each of the first codes (18) in the longitudinal axis of the current collector (16), making it possible to predict or retrospectively identify individual differences between electrode materials used in cells.

## Description

The present invention relates to a method of manufacturing an electricity storage device, a recording device, and an electricity storage device manufacturing apparatus.

### BACKGROUND

JP 2015-167078 A discloses a method of manufacturing an electrode by cutting an electrode material including a long sheet-shaped metal foil having, on at least one surface thereof, an active material mixture-coated portion and a metal foil exposed portion. In such a manufacturing method, the electrode material is cut into strips, to form strip bodies. A plurality of the strip bodies are stacked on each other, to thereby produce an electrode. In such a manufacturing method, the electrode material-coated portion is inspected to determine whether or not a defective portion is present in the coated portion. If a defective portion is present in the coated portion, a mark is applied to the exposed portion. When cutting the electrode material, the mark is detected with a mark detecting device, so as to be able to determine whether or not a defective portion is present in the coated portion. A portion of the electrode material that contains the coated portion that has been determined to have a defective portion is not cut into the strip body and is not used for the manufacture of the electrode. In addition, the mark is placed outside the region of the electrode material that is cut as the strip bodies, so the strip bodies do not contain the mark. This allows use of only the strip bodies that do not contain defective portions in the coated portion, to manufacture the electrode.

In the above-described manufacturing method, the thickness of the active material mixture is not completely uniform in the coating process of the active material mixture. This causes the final assembled cells to have individual differences in the electrode materials used in the cells. Such individual differences cannot be estimated beforehand or identified afterwards.

### SUMMARY

According to the present disclosure, a method of manufacturing an electricity storage device includes: a step of affixing, at a predetermined interval to an uncoated region of a strip-shaped current collector, first identifiers each for identifying a position in the strip-shaped current collector, the uncoated region predefined along a longitudinal axis of the strip-shaped current collector; a step of forming an active material layer on a portion of the strip-shaped current collector that is other than the uncoated portion; and an inspection step of recording, in association with each of the first identifiers, inspection information indicative of a condition of the active material layer that has been inspected while identifying a position in the strip-shaped current collector.

The just-described method of manufacturing an electricity storage device makes it possible to retrospectively acquire inspection information of the active material layer corresponding to the positions to which the first identifiers are affixed, in the longitudinal axis of the current collector.

### BRIEF DESCRIPTION OF THE DRAWINGS

Fig. 1 is a perspective view illustrating a lithium-ion secondary battery 10.
Fig. 2 is a schematic vertical cross-sectional view taken along line II-II in Fig. 1.
Fig. 3 is a schematic view of an electrode assembly 20.
Figs. 4(a) to 4(f) are schematic views illustrating a manufacturing process of an electrode sheet 15.
Fig. 5 is a schematic view illustrating an electricity storage device manufacturing apparatus 1.
Fig. 6 is a view illustrating an example of a database DT built by a recording device 210.
Fig. 7 is a flowchart illustrating a method of manufacturing a lithium-ion secondary battery 10.
Fig. 8 is a flowchart illustrating another method of manufacturing the lithium-ion secondary battery 10, in a different order from that of the flowchart shown in Fig. 7.

### DETAILED DESCRIPTION

Hereinbelow, the present disclosure will be described in detail. Unless otherwise stated, the present disclosure is not intended to limit the invention as set forth in the appended claims. The drawings are depicted schematically and do not necessarily accurately depict actual objects.

The features and components that exhibit the same effects are designated by the same reference symbols as appropriate, and the description thereof will not be repeated. Unless specifically stated otherwise, the recitation of numerical ranges in the present description, such as "X to Y", is meant to include any values between the upper limits and the lower limits, inclusive, that is, "greater than or equal to X to less than or equal to Y".

The present disclosure relates to a method of manufacturing an electricity storage device. With the method of manufacturing an electricity storage device disclosed herein, a lithium-ion secondary battery is manufactured, for example. In the electrode assembly of the lithium-ion secondary battery, the positive electrode current collector is composed of aluminum or aluminum alloy, and the negative electrode current collector is composed of copper or copper alloy, for example.

### Lithium-ion Secondary Battery 10

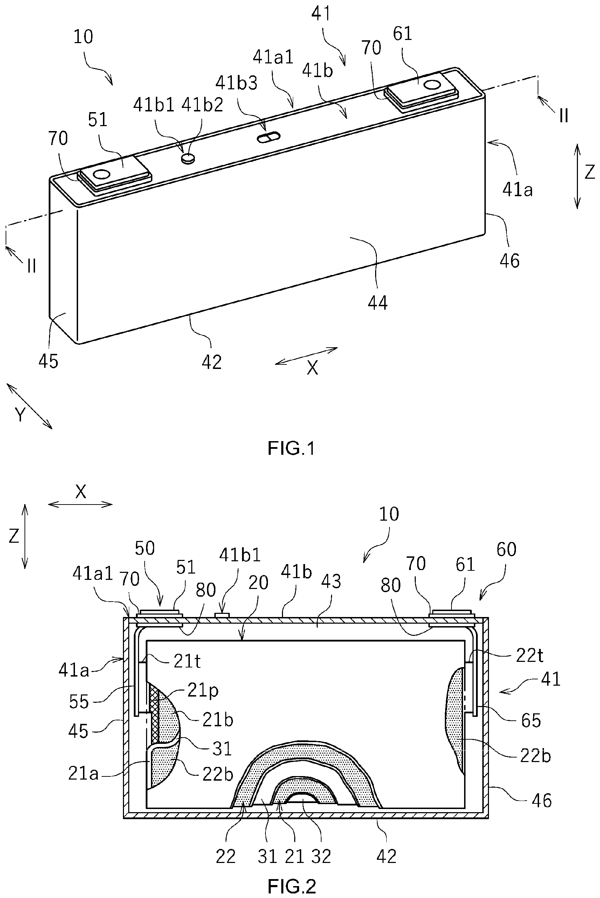

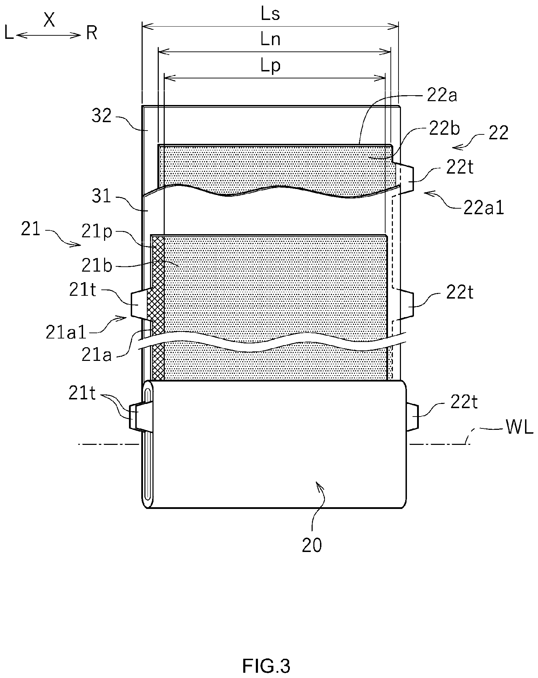

Fig. 1 is a perspective view illustrating a lithium-ion secondary battery 10. Fig. 2 is a schematic vertical cross-sectional view taken along line II-II in Fig. 1. Fig. 3 is a schematic view of an electrode assembly 20. Fig. 2 depicts the interior of the lithium-ion secondary battery 10 that is exposed along one wider surface of a battery case 41 in substantially a rectangular parallelepiped shape. Fig. 2 also illustrates the electrode assembly 20 in a partial cross-sectional view in which it is partially cut out. The lithium-ion secondary battery 10 shown in Fig. 2 is what is called a sealed battery in which the battery case 41 accommodating an electrode assembly 20 is sealed. In the present embodiment, the battery case 41 is composed of a prismatic case made of metal in a substantially rectangular parallelepiped shape. In the drawings, the reference character X indicates a longer side axis of the battery case 41. The reference character Y (see Fig. 1) indicates a shorter side axis that is orthogonal to the longer side axis. The reference character Z indicates a heightwise axis that is orthogonal to the shorter side axis and the longer side axis. The configuration of the battery case 41 is not limited to such embodiments. For example, the battery case 41 may be a cylindrical case, or may be what is called a pouch-shaped laminate case that covers the electrode assembly 20.

As illustrated in Fig. 2, the lithium-ion secondary battery 10 includes an electrode assembly 20 and a battery case 41. The battery case 41 includes a case main body 41a that includes an open end 41a1, and a sealing plate 41b that closes the open end 41a1 of the case main body 41a. The case main body 41a encloses the electrode assembly 20. Internal terminals 55, 65 and external terminals 51, 61 are attached to the sealing plate 41b, with a gasket 70 and an insulator 80 interposed between them. In the present embodiment, the internal terminal 55 is connected to a positive electrode current collector foil 21a of the electrode assembly 20. The external terminal 51 is connected to the internal terminal 55, constituting a positive electrode terminal 50 outside the battery case 41. The internal terminal 65 is connected to a negative electrode current collector 22a of the electrode assembly 20. The external terminal 61 is connected to the internal terminal 65, constituting a negative electrode terminal 60 outside the battery case 41.

### Electrode Assembly 20

As illustrated in Fig. 3, in the electrode assembly 20, a positive electrode element 21 and a negative electrode element 22 face each other across a separator. The positive electrode element 21 includes a positive electrode current collector 21a and a positive electrode active material layer 21b, which is formed on the positive electrode current collector 21a and includes a positive electrode active material. The negative electrode element 22 includes a negative electrode current collector 22a and a negative electrode active material layer 22b, which is formed on the negative electrode current collector 22a and includes a negative electrode active material. Each of the positive electrode element 21 and the negative electrode element 22 may be in a sheet shape. In that case, the positive electrode element may be a sheet-shaped member in which the positive electrode active material layer 21b is formed on both sides of the positive electrode current collector 21a, which is made of a metal foil having a predetermined width and thickness. The negative electrode element may be a sheet-shaped member in which the negative electrode active material layer 22b is formed on both sides of the negative electrode current collector 22a, which is made of a metal foil having a predetermined width and thickness. The sheet-shaped positive electrode element 21 is referred to as a positive electrode sheet. The sheet-shaped negative electrode element 22 is referred to as a negative electrode sheet.

For example, the electrode assembly 20 may be what is called a wound electrode assembly. The electrode assembly 20 includes a positive electrode sheet 21 serving as the positive electrode element, a negative electrode sheet 22 serving as the negative electrode element, and separator sheets 31 and 32 serving as separators. The positive electrode sheet 21, the first separator sheet 31, the negative electrode sheet 22, and the second separator sheet 32 are each a long strip-shaped member, and they are stacked with their longitudinal axes and lateral axes aligned in uniform orientations and wound together. The electrode assembly 20 is covered with an insulating film (not shown) and is enclosed in the battery case 41.

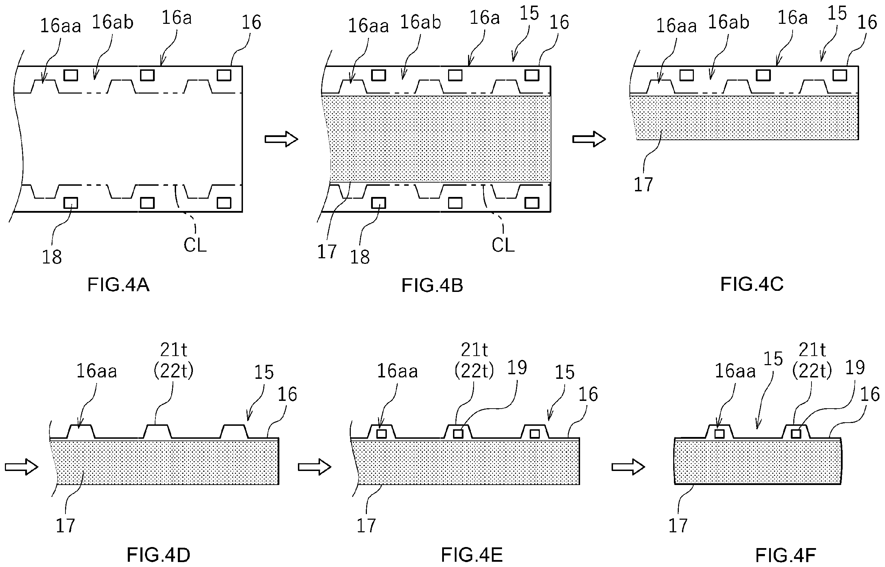

The positive electrode sheet 21 and the negative electrode sheet 22 are formed by, for example, cutting an electrode sheet that is wound in a roll shape. As illustrated in Fig. 4(b), the electrode sheet 15 includes a current collector 16 and an active material layer 17. Figs. 4(a) to 4(f) are schematic views illustrating a manufacturing process of the electrode sheet 15. The details of Figs. 4(a) to 4(f) will be described later.

The current collector 16 is an oblong strip-shaped metal member. For the current collector 16, it is possible to use a metal material that has required electrical conductivity. For the positive electrode current collector, it is possible use, for example, aluminum, aluminum alloys, or the like. For the negative electrode current collector, it is possible to use, for example, copper, copper alloys, or the like. The active material layer 17 is formed on at least one surface of the strip-shaped current collector 16. In the present embodiment, the active material layer 17 is formed on both surfaces of the current collector 16. The active material layer 17 is a layer containing an electrode active material. For a positive electrode active material, it is possible to use, for example, lithium-transition metal composite oxides. For a negative electrode active material, it is possible to use, for example, carbon materials, silicon based materials, and composite oxides thereof. The active material layer may also contain additive agents other than the electrode active material, such as binders and conductive agents.

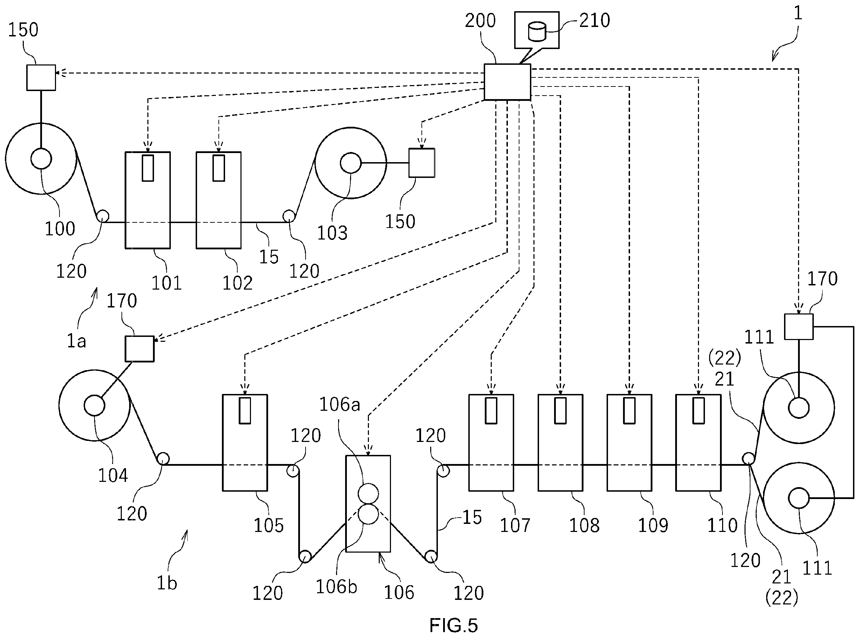

The electrode sheet 15 is formed by coating an electrode mixture slurry, which forms the active material layer 17, onto the current collector 16, and drying. The electrode mixture slurry is a paste material that is formed by mixing a positive electrode active material or a negative electrode active material, a conductive agent, a binder, and the like in a solvent. The electrode mixture slurry is coated using a later-described coating device 102 (see Fig. 5). The current collector 16 is provided with an uncoated portion 16a. The uncoated portion 16a is disposed at a predetermined position along the length of the current collector 16. In the present embodiment, the uncoated portions 16a are defined at both widthwise end positions of the current collector 16. The electrode mixture slurry is coated onto a portion of the current collector 16 that is other than the uncoated portions 16a. As a result, the active material layer 17 is formed on the portion of the current collector 16 that is other than the uncoated portions 16a.

### Positive Electrode Sheet 21

The positive electrode sheet 21 is an electrode sheet 15 as described above that uses a positive electrode current collector as the current collector 16 and includes a positive electrode active material layer as the active material layer 17. As illustrated in Fig. 3, the positive electrode sheet 21 includes a positive electrode current collector 21a having a predetermined width and a predetermined thickness, a positive electrode active material layer 21b containing a positive electrode active material, and an uncoated portion 21a1 defined along one lateral edge of the positive electrode current collector 21a with a constant width. The positive electrode active material layer 21b is formed on one surface of the positive electrode current collector 21a, except for the uncoated portion 21a1. The uncoated portion 21a1 is provided with a plurality of positive electrode tabs 21t disposed intermittently at predetermined positions along the longitudinal axis of the positive electrode sheet 21. Each of the plurality of positive electrode tabs 21t protrudes in a widthwise direction of the positive electrode sheet 21.

In the lithium-ion secondary battery 10, for example, the positive electrode active material layer 21b releases lithium ions during charge and absorbs lithium ions during discharge. The positive electrode active material may be, for example, lithium-transition metal composite material. Other than the lithium-transition metal composite material, various materials have been proposed for use as the positive electrode active material, and unless specifically stated otherwise, the positive electrode active material is not limited to the lithium-transition metal composite material. The positive electrode active material layer 21b may be one in which the electrode mixture slurry is coated and dried. In addition, in the present embodiment, a positive electrode protective layer 21p is provided on the positive electrode current collector 21a (uncoated portion 21a1) at the edge of the positive electrode active material layer 21b. The positive electrode protective layer 21p is a layer that protects the uncoated portion 21a1 and may be a layer containing an inorganic filler (for example, alumina).

### Negative Electrode Sheet 22

The negative electrode sheet 22 is an electrode sheet 15 as described above that uses a negative electrode current collector as the current collector 16 and includes a negative electrode active material layer as the active material layer 17. The negative electrode sheet 22 includes a negative electrode current collector 22a having a predetermined width and a predetermined thickness, a negative electrode active material layer 22b containing a negative electrode active material, and an uncoated portion 22a1 defined along one lateral edge of the negative electrode current collector foil 22a with a constant width. The negative electrode active material layer 22b is formed on one surface of the negative electrode current collector 22a, except for the uncoated portion 22a1. In the present embodiment, the uncoated portion 22a1 is provided with a plurality of negative electrode tabs 22t disposed intermittently at predetermined positions along the longitudinal axis of the negative electrode sheet 22. Each of the plurality of negative electrode tabs 22t protrudes in a widthwise direction of the negative electrode sheet 22. In the present embodiment, the positions at which the plurality of negative electrode tabs 22t are to be disposed are determined so that the positions of the plurality of negative electrode tabs 22t are aligned when the negative electrode sheet 22 is in a wound state.

The negative electrode current collector 22a uses a material that has required resistance properties such as electrolyte resistance and oxidation resistance, taking the operating potential at the negative electrode into consideration. For example, in the lithium-ion secondary battery 10, copper or an copper alloy made primarily of copper, for example, is commonly used for the negative electrode current collector 22a. In the sheet-shaped negative electrode element 22, copper or a copper foil made primarily of copper may be used for the negative electrode current collector 22a. For the negative electrode active material contained in the negative electrode active material layer 22b, it is possible to use a material that is capable of absorbing charge carriers during charge and releasing charge carriers during discharge. For example, in lithium-ion secondary batteries, the negative electrode active material is a material that is capable of absorbing lithium ions during charge and releasing the absorbed lithium ions during discharge, such as natural graphite. Other than natural graphite, various materials have generally been proposed for use as the negative electrode active material, and the negative electrode active material is not limited to any particular material. The negative electrode active material layer 22b may be, for example, one in which a mixture material containing the negative electrode active material as described above, a conductive agent, a binder, and the like that are mixed in a solvent, is coated and then dried.

Each of the separator sheets 31 and 32 may be formed of, for example, an electrolyte permeable porous resin sheet that has required heat resistance. Various proposals have been made about the separator sheets 31 and 32, and there is no particular restriction on the separator sheets 31 and 32. The separator sheets 31 and 32 may include a function layer, such as an adhesive layer or a heat resistant layer (HRL), disposed on a surface of a substrate composed of porous resin sheet. The heat resistant layer is a layer containing, for example, an inorganic filler such as alumina, silica, boehmite, magnesia, or titania, and a binder such as PVdF. The heat resistant layer may also serve as an adhesive layer.

Herein, as illustrated in Fig. 3, width Ln of the negative electrode active material layer 22b is formed wider than, for example, width Lp of the positive electrode active material layer 21b. Width Ls of the separator sheets 31 and 32 is wider than that of the negative electrode active material layer 22b. In other words, Lp < Ln < Ls, as shown in Fig. 3. The positive electrode sheet 21, the first separator sheet 31, the negative electrode sheet 22, and the second separator sheet 32 are aligned longitudinally, stacked one on another, and wound together. Here, the negative electrode active material layer 22b covers the positive electrode active material layer 21b with the separator sheets 31 and 32 interposed therebetween. The negative electrode active material layer 22b is covered with the separator sheets 31 and 32. The positive electrode tabs 21t of the positive electrode current collector 21a and the negative electrode tabs 22t of the negative electrode current collector 22a are provided so as to protrude widthwise in opposite directions to each other from the separator sheets 31 and 32. The positive electrode protective layer 21p is opposed at the side edge of the negative electrode sheet 22 that is opposite to the side at which the negative electrode tabs 22t are provided, with the separator sheets 31 and 32 interposed.

As illustrated in Fig. 2, the electrode assembly 20 is formed in a flattened shape along one plane containing the winding axis WL (see Fig. 3) so that it can be enclosed in the case main body 41a of the battery case 41. Along the winding axis WL of the electrode assembly 20, the positive electrode tabs 21t are disposed at one end, and the negative electrode tabs 22t are disposed at the opposite end. Herein, as an example of the electrode assembly 20, a wound electrode assembly is illustrated in which the positive electrode sheet 21, the first separator sheet 31, the negative electrode sheet 22, and the second separator sheet 32 are stacked and wound together. The configuration of the electrode assembly 20 is not limited to such a wound electrode assembly. Although not shown in the drawings, the electrode assembly 20 may be, for example, what is called a stacked electrode assembly, in which a plurality of positive electrode sheets and a plurality of negative electrode sheets in a predetermined shape are stacked together with separator sheets interposed therebetween.

### Battery Case 41

The battery case 41 encloses the electrode assembly 20. In the present embodiment, the battery case 41 includes a case main body 41a and a sealing plate 41b. The case main body 41a is a closed-bottom member having an open end 41a1 disposed opposite its bottom surface. In the present embodiment, the case main body 41a is in a substantially rectangular parallelepiped shape one side surface of which is open. The sealing plate 41b is a plate-shaped member attached to the open end 41a1 of the case main body 41a. In the present embodiment, the case main body 41a and the sealing plate 41b are formed of aluminum or an aluminum alloy composed mainly of aluminum, from the viewpoints of reducing weight and providing sufficient rigidity. It is also possible that a plurality of electrode assemblies 20 may be housed in the battery case 41.

The battery case 41 may enclose an electrolyte solution, which is not shown. The electrolyte solution may be a non-aqueous electrolyte solution in which a supporting salt is dissolved in a non-aqueous solvent. Examples of the non-aqueous solvent include carbonate-based solvents, such as ethylene carbonate, dimethyl carbonate, and ethyl methyl carbonate. Examples of the supporting salt include fluorine-containing lithium salts, such as LiPF₆.

### Case Main Body 41a

As illustrated in Fig. 2, the case main body 41a has a substantially rectangular parallelepiped shape one side surface of which is open. The case main body 41a includes a substantially rectangular bottom surface portion 42, a pair of wider side surface portions 43 and 44 (see Fig. 1), and a pair of narrower side surface portions 45 and 46. The pair of wider side surface portions 43 and 44 extend upward from respective longer sides of the bottom surface portion 42. The pair of narrower side surface portions 45 and 46 extend upward from respective shorter sides of the bottom surface portion 42. An open end 41a1, which is surrounded by the pair of wider side surface portions 43 and 44 and the pair of narrower side surface portions 45 and 46, is formed in one end face of the case main body 41a.

### Sealing Plate 41b

The sealing plate 41b closes the open end 41a1 of the case main body 41a. In the present embodiment, the sealing plate 41b is in a rectangular shape when viewed in plan, as illustrated in Fig. 1. In the present embodiment, the sealing plate 41b is provided with a filling port 41b1 and a safety vent 41b3. After the sealing plate 41b is attached to the open end 41a1 of the case main body 41a and an electrolyte solution is filled into the case main body 41a, the filling port 41b1 is closed by a sealing member 41b2 attached thereto. Note that Fig. 2 shows a state in which the sealing plate 41b has been attached and welded to the open end 41a1 of the case main body 41a. In Fig. 2, the sealing member 41b2 is not attached to the sealing plate 41b. The safety vent 41b3 is a thinned portion that raptures when the internal pressure of the battery case 41 becomes higher than a predetermined pressure.

As illustrated in Fig. 2, the positive electrode terminal 50 and the negative electrode terminal 60 are attached to the sealing plate 41b. The positive electrode terminal 50 includes an external terminal 51 and an internal terminal 55. The negative electrode terminal 60 includes an external terminal 61 and an internal terminal 65. Each of the internal terminals 55 and 65 is fitted to the inside of the sealing plate 41b with an insulator 80 interposed. Each of the external terminals 51 and 61 is fitted to the outside of sealing plate 41b with a gasket 70 interposed. Each of the internal terminals 55 and 65 extends inward of the case main body 41a. The uncoated portion 21a1 of the positive electrode current collector 21a and the uncoated portion 22a1 of the negative electrode current collector 22a of the electrode assembly 20 are attached to the respective internal terminals 55 and 65, which are respectively attached to opposite longitudinal side-edge portions of the sealing plate 41b.

The internal terminals 55 and 65 are made of a metal. The internal terminal 55 of the positive electrode may be made of, for example, aluminum or an aluminum alloy, from the viewpoint of improving the joining strength with the positive electrode tabs 21t. The internal terminal 65 of the negative electrode may be made of, for example, copper or a copper alloy, from the viewpoints of improving the joining strength with the negative electrode tabs 22t and providing required resistance properties such as electrolyte resistance and oxidation resistance.

The external terminals 51 and 61 are made of a metal. The metal usable as the external terminals 51 and 61 may be selected as appropriate depending on, for example, the type of the external component connected thereto, such as bus bar. The external terminals 51 and 61 may be made of, for example, aluminum, an aluminum alloy, copper, a copper alloy, or the like. The external terminals 51 and 61 may be constructed of, for example, a plurality of types of metals joined together by a dissimilar metal joint. Although not shown in the drawings, the sealing plate 41b is formed with mounting holes. An insulator 80 is attached to each of the mounting holes inside the sealing plate 41b, and a gasket 70 is attached to each of the mounting holes outside the sealing plate 41b. Either one of the terminals of the internal terminals 55, 65 and the external terminals 51, 61 is provided with a shaft portion, which is inserted through each of the mounting holes via the gasket 70 and the insulator 80. The internal terminals 55, 65 and the external terminals 51, 61 are joined by the respective shaft portions inserted through the mounting holes.

The gasket 70 and the insulator 80 may be made of a material that is excellent in chemical resistance and weather resistance. In the present embodiment, the gasket 70 is made of tetrafluoroethylene-perfluoroalkyl vinyl ether copolymer (PFA). It should be noted that the material that may be used for the gasket 70 is not limited to PFA. The gasket 70 may be made of, for example, polypropylene (PP), polyethylene (PE), polyphenylene sulfide (PPS), or the like. The insulator 80 is made of polyphenylene sulfide (PPS). It should be noted that the material that may be used for the insulator 80 is not limited to PPS.

In manufacturing the lithium-ion secondary battery 10, with the gasket 70 and the insulator 80 being attached to the sealing plate 41b, the positive electrode terminal 50 and the negative electrode terminal 60 are attached to the sealing plate 41b. Subsequently, the positive electrode tabs 21t are joined to the internal terminal 55 of the positive electrode terminal 50, and the negative electrode tabs 22t are joined to the internal terminal 65 of the negative electrode terminal 60, whereby the electrode assembly 20 is attached to the sealing plate 41b. Subsequently, while the electrode assembly 20 is inserted into the case main body 41a from the open end 41a1, the sealing plate 41b is fitted to the open end 41a1 (see Fig. 1) of the case main body 41a. At this time, the winding axis WL (see Fig. 3) is disposed along the longer side axis X of the case main body 41a. The positive electrode tabs 21t of the electrode assembly 20 are disposed facing a narrower surface portion 45. The negative electrode tabs 22t are disposed facing a narrower surface portion 46. Then, as illustrated in Fig. 2, the peripheral edge portion of the sealing plate 41b is joined to the edge of the open end 41a1 of the case main body 41a. The joining may be achieved by, for example, continuous welding without providing gaps. Such welding may be carried out by, for example, laser welding.

It is also possible that a plurality of electrode assemblies 20 may be housed in the battery case 41. Various kinds of structures may be employed for the internal terminals 55, 65, the external terminals 51, 61, the gasket 70, and the insulator 80. For example, appropriate structures may be employed for the internal terminals 55, 65, the external terminals 51, 61, the gasket 70, and the insulator 80, according to the structure of the electrode assembly 20 enclosed in the battery case 41. In addition, one of the positive electrode terminal 50 and the negative electrode terminal 60 may be provided with a mechanism that interrupts electric current as the internal pressure builds up due to the gas generated inside at the event of overcharge [i.e., current interrupt device (CID)].

Hereinabove, the configuration of the lithium-ion secondary battery 10 which is to be manufactured has been described.

The positive electrode sheet 21 and the negative electrode sheet 22 are formed by, for example, applying an active material mixture onto a long strip-shaped current collector 16. In the manufacture of a cell, a required length of electrode sheet 15 is cut out from the long strip-shaped electrode sheet 15 and incorporated in an electrode assembly 20. The present inventors considered that improvements in the quality of the electrode assembly 20 during the assembling and prediction of individual differences between batteries are possible when it is possible to retrospectively identify the thickness of the active material layer 17 along the longitudinal axis of the electrode sheet 15 used in a cell during or after the assembling of the cell.

Accordingly, the present inventors have discovered that it would be advantageous to include the following steps in a method of manufacturing an electricity storage device.

Step (A): Affixing, at a predetermined interval to an uncoated region 16a that is predefined along a longitudinal axis of a strip-shaped current collector 16, first codes 18 each for identifying a position in the strip-shaped current collector 16.

Step (B): Forming an active material layer 17 on a portion of the strip-shaped current collector 16 that is other than the uncoated portion 16a.

Step (C): An inspection step of recording, in association with each of the first codes 18, inspection information about a condition of the active material layer 17 that has been inspected while identifying a position in the strip-shaped current collector.

The just-described method of manufacturing an electricity storage device makes it possible to retrospectively acquire inspection information of the active material layer 17 corresponding to the positions to which the first codes 18 are affixed, in the longitudinal axis of the current collector 16. This makes it possible to retrospectively identify the thickness of the active material mixture along the longitudinal axis of the electrode sheet 15 used in a cell during or after the assembling of the cell. As a result, it is possible to predict or retrospectively identify individual differences between the electrode materials used for the cells.

Figs. 4(a) to 4(f) are, as mentioned previously, schematic views illustrating a manufacturing process of an electrode sheet 15. Fig. 4(a) is a view illustrating the step of affixing the first codes 18 each for identifying the position in the strip-shaped current collector 16, at a predetermined interval to the uncoated region 16a, which is predefined along the longitudinal axis of the strip-shaped current collector 16. Herein, the cutting line CL indicated by dash-dot-dot line is a line indicating the position to be cut when tabs 21t or 22t (see Fig. 3) are formed. In the present description, forming tabs 21t or 22t by cutting at the cutting line CL is referred to as "tab cutting". The details of the first code 18 will be described later. Fig. 4(b) is a view illustrating the step of forming the active material layer 17 on a portion of the strip-shaped current collector 16 that is other than the uncoated portion 16a. In the condition shown in Fig. 4(b), inspection information about the condition of the active material layer 17 that has been inspected while identifying the position in the strip-shaped current collector 16 is recorded in association with each of the first codes 18. Fig. 4(c) is a view illustrating the step of cutting the electrode sheet 15 widthwise in half from the condition shown in Fig. 4(b).

Herein, the uncoated region 16a includes a tab formation region 16aa and a code imprinting region 16ab. The tab formation region 16aa is a region of the uncoated region 16a that later form tabs 21t or 22t (see Fig. 3), which will be described later, by cutting off the code imprinting region 16ab. In the code imprinting region 16ab, the first codes 18 are formed. The first code 18 is an example of the first identifier of the present invention. The first code 18 is, for example, a two-dimensional code, such as a QR code (registered trademark). It is also possible that the first code 18 may be, for example, a one-dimensional code (bar code). Here, one-dimensional code includes a plurality of straight lines extending in one direction. This means that, to form the one-dimensional code, it is necessary to stop conveying the electrode sheet 15 as appropriate to form the one-dimensional code, reducing the efficiency. Therefore, although the first code 18 may be a one-dimensional code, it is preferable that the first code 18 be a two-dimensional code. Alternatively, the first identifier may be a predetermined mark or the like.

The first codes 18 are affixed at predetermined intervals along the longitudinal axis of the electrode sheet 15. The first codes 18 are formed by, for example, laser light. In the present embodiment, the first codes 18 are affixed, for example, every 1 meter along the longitudinal axis of the electrode sheet 15. The first codes 18 are affixed in the code imprinting region 16ab. The first codes 18 each includes information for identifying the position in the current collector 16 at which the first code 18 is formed. The information for identifying the position in the current collector 16 at which the first code 18 is formed is referred to herein as "identifying information". The identifying information may be such that, for example, consecutive numbers 0, 1, 2, 3, ..., etc. are registered in order from the first code 18 that is affixed at the foremost end of the electrode sheet 15.

The present inventors also have discovered that it would be effective to further include the following steps in the method of manufacturing an electricity storage device.

Step (D): A tab cutting process step of performing tab cutting in the uncoated region 16a while reading each of the first codes 18 on the strip-shaped current collector 16 to identify the position in the strip-shaped current collector 16.

Step (E): Affixing second codes 19 to predetermined positions of the tabs 21t or 22t that have been formed in the tab cutting process step.

Step (F): A winding step of reading the second codes 19 and winding the strip-shaped current collector 16 that has undergone the tab cutting process.

Fig. 4(d) is a schematic view illustrating the tab cutting process step of performing tab cutting for the uncoated region 16a. Fig. 4(e) is a schematic view illustrating the step of affixing second codes 19 to predetermined positions of the tabs 21t or 22t that have been formed in the tab cutting process step. Fig. 4(f) is a view illustrating the step of reading the second code 19 and winding the strip-shaped current collector 16 that has undergone the tab cutting process.

The second codes 19 are affixed at predetermined intervals along the longitudinal axis of the electrode sheet 15. The second code 19 is an example of the second identifier of the present invention. The second codes 19 are affixed at predetermined positions on the tabs 21t or 22t that have been formed by tab cutting. That is, the second codes 19 are affixed in the tab formation region 16aa. The second codes 19 each contains identifying information, like the first codes 18. In addition, the second codes 19 are respectively associated with all the identifying information of the first codes 18 contained in the positive electrode sheet 21 and the negative electrode sheet 22. The second code 19 is, for example, a two-dimensional code, such as a QR code (registered trademark). It is also possible that the second code 19 may be a one-dimensional code, as is the first code 18.

The present inventors also have discovered that it would be effective to further include the following steps in the method of manufacturing an electricity storage device.

Step (G): Encasing the electrode assembly 20 into the battery case 41 while reading the second codes 19 of the electrode assembly 20 obtained in the winding step.

Step (H): Acquiring a unique number affixed to the battery case 41.

Step (I): Recording the unique number of the battery case 41 and the second code 19 of the electrode assembly 20 encased in the battery case 41 while associating the unique number of the battery case 41 with the second code 19 of the electrode assembly 20.

It is assumed herein that the battery case 41 (see Fig. 2) in the present embodiment is provided with a unique number. The unique number is a number that allows each one of battery cases 41 to be identified, for example, a number unique to each battery case that is determined by the date of manufacture or by the order of manufacture. Although not shown in the drawings, the unique number is imprinted on the outer surface of the battery case 41, for example. The unique number is read by, for example, a camera. The unique number may be affixed to the battery case 41 in advance or may be affixed by a later-described electricity storage device manufacturing apparatus 1. However, the method of identifying the battery case 41 is not limited thereto. In order to identify the battery case 41, it is possible that a unique barcode or the like may be printed thereon, for example.

### Electricity Storage Device Manufacturing Apparatus 1

Fig. 5 is a schematic view illustrating an electricity storage device manufacturing apparatus 1. The method of manufacturing an electricity storage device as described above may be embodied with the electricity storage device manufacturing apparatus 1 as shown in Fig. 5. In the following, the electricity storage device manufacturing apparatus 1 shown in Fig. 5 will be described. Herein, the electricity storage device manufacturing apparatus 1 manufactures a lithium-ion secondary battery 10 (see Fig. 1). The electricity storage device manufacturing apparatus 1 includes a code imprinting line 1a and an electrode manufacturing line 1b. The code imprinting line 1a includes a feed roller 100, a first laser imprinting device 101, a coating device 102, and a winding roller 103. The electrode manufacturing line 1b includes a feed roller 104, a first inspection device 105, a compression device 106, a second inspection device 107, a cut-in-half device 108, a cutting device 109, a second laser imprinting device 110, and winding rollers 111. In addition, the electricity storage device manufacturing apparatus 1 includes a controller 200, and the controller 200 is connected to various devices 100 to 111.

The electrode sheet 15 is wound around the feed rollers 100 and 104. The electrode sheet 15 is conveyed along a predetermined conveyance passage and is taken up on the winding rollers 103 and 111. The feed rollers 100 and 104 and the winding rollers 103 and 111 may be fitted to an autosplicing device that replaces the respective rollers that have completed feeding and winding with new rollers. In the present embodiment, the feed roller 100 and the winding roller 103 are driven by the conveyor device 150. The feed roller 104 and the winding rollers 111 are driven by the conveyor device 170. Although the details are not shown in the drawings, the electricity storage device manufacturing apparatus 1 includes guide rollers 120 disposed along a predetermined conveyance passage so that the electrode sheet 15 can be conveyed along the conveyance passage. Although not shown in the drawings, the conveyance passage may be provided with various rollers that are disposed as appropriate, such as guide rollers, dancer rollers, and feed rollers, for example. The conveyor device 150, the various devices 100 to 111 incorporated in the electricity storage device manufacturing apparatus 1, the conveyor device 170, and so forth are each configured to be controlled by the controller 200.

In the present embodiment, the coating device 102, the first inspection device 105, the second inspection device 107, the cut-in-half device 108, the second laser imprinting device 110, and the winding rollers 111 are each provided with a sensor (not shown) for reading the first code 18. Such a sensor is also provided near the feed roller 104, and the sensor is connected wiredly or wirelessly to the compression device 106 and the cutting device 109. The sensor may be implemented by, for example, a camera. The electricity storage device manufacturing apparatus 1 also includes a winding device (not shown) and an assembling device (not shown) that are disposed downstream of the winding rollers 111. The winding device is a device that stacks the positive electrode sheet 21, the negative electrode sheet 22, and the separator sheets 31 and 32 (see Fig. 2) on each other and winds them together, to prepare the electrode assembly 20. Note that the assembling device may also be provided with a sensor for reading the first code 18. The assembling device is a device that encases the prepared electrode assembly 20 into the battery case 41 (see Fig. 1) and performs such operations as filling an electrolyte solution and the like, to thereby manufacture a lithium-ion secondary battery 10. However, the method of assembling with the use of the winding device and the assembling device are the same as those of known techniques, so the detailed illustration is not provided.

### Conveyor Devices 150 and 170

The conveyor devices 150 and 170 each conveys the electrode sheet 15. Although not particularly limited thereto, the conveying speed of the electrode sheet 15 may be set to about 10 m/minute to about 160 m/minute in the code imprinting line 1a and the electrode manufacturing line 1b. The present embodiment uses a motor as each of the conveyor devices 150 and 170. The conveyor devices 150 and 170 drive rotation of the feed rollers 100 and 104 and the winding rollers 103 and 111 so as to be able to convey the electrode sheet 15 at a predetermined conveying speed. The rotational speed of the feed rollers 100 and 104 and the winding rollers 103 and 111, which are driven by the conveyor device 150, may be controlled by the controller 200. The rotational speed of the feed rollers 100 and 104 and the winding rollers 103 and 111 may be controlled according to a predetermined program so that the conveying speed of the electrode sheet 15 becomes constant. The rotational speed of the feed rollers 100 and 104 and the winding rollers 103 and 111 may be controlled, for example, corresponding to the amount of the electrode sheet 15 that is wound on the feed rollers 100 and 104 and the winding rollers 103 and 111. Additionally, the electricity storage device manufacturing apparatus 1 may also include a dancer roller or the like.

### First Laser Imprinting Device 101

The first laser imprinting device 101 is a device that forms a first code 18 on the electrode sheet 15. The first laser imprinting device 101 is an example of the first identifier affixing device of the present invention. The first laser imprinting device 101 includes a laser emitting unit (not shown) to form a desired first code 18. The first laser imprinting device 101 forms the first code 18 that contains identifying information into the electrode sheet 15. Note that the method of affixing a QR code (registered trademark) on the electrode sheet 15 is not limited to the imprinting with the use of laser light. The device that affixes the first code 18 may be a device that prints a QR code (registered trademark), for example.

### Coating Device 102

The coating device 102 is a device that coats the active material layer 17 onto the current collector 16. The coating device 102 is an example of the active material layer formation device of the present invention. The coating device 102 applies a prepared electrode mixture slurry onto the current collector 16. In the case where the positive electrode sheet 21 is produced in the electrode manufacturing line 1b, the current collector 16 is a positive electrode current collector and the active material layer 17 is a positive electrode active material layer. In the case where the negative electrode sheet 22 is produced in the electrode manufacturing line 1b, the current collector 16 is a negative electrode current collector and the active material layer 17 is a negative electrode active material layer. The coating of the current collector with the electrode active material layer may be performed with the use of a known coating device. For the coating device, it is possible to use, for example, a slit coater, a gravure coater, a die-coater, a comma coater, or the like. The active material layer 17 may be coated on a surface of the current collector 16 that is opposite the surface thereof that is supported by a backup roller, with the current collector 16 being supported by the backup roller. Note that the active material layer 17 may be coated on both surfaces of the current collector 16. It is also possible that the coating device may be provided with a dryer device for drying the active material layer 17 coated on the current collector 16. For the dryer device, it is possible to use a device that dries the active material layer 17 with hot air, infrared rays, or the like. In the present embodiment, the coating device 102 is configured to perform coating of the electrode mixture slurry after reading the first code 18 with a sensor. The coating device 102 associates the read identifying information of the first code 18 and the information of the coating conditions with each other and transmits them to the controller 200. The coating conditions include the amount of electrode mixture slurry to be coated, for example.

### First Inspection Device 105

The first inspection device 105 is a device that measures the width and the in-line film thickness of the active material layer 17 coated on the current collector 16 that is upstream of the compression device 106. In the present embodiment, the first inspection device 105 is configured to perform the measurement after reading the first code 18 with a sensor. The first inspection device 105 measures the width and film thickness of a portion of the current collector 16 on which the active material layer 17 is formed. The first inspection device 105 is, however, not particularly limited to the foregoing example as long as it is possible to inspect the active material layer 17. The present embodiment uses a device that is capable of measuring film thickness in a non-contact manner is used as the first inspection device 105. The first inspection device 105 is configured to perform the inspection at the same position in the active material layer 17 as is the position of the first code 18 with respect to the longitudinal axis of the current collector 16. The first inspection device 105 may be able to measure the thickness at one location or a plurality of locations of the electrode sheet 15 in its widthwise direction, or the entire area thereof in the widthwise direction. The first inspection device 105 associates the identifying information of the first code 18 and the inspection information with each other and transmits them to the controller 200.

### Compression Device 106

The compression device 106 is a device that compresses the electrode sheet 15 conveyed by the conveyor device 150. The active material layer 17 on the electrode sheet 15 may be compressed by the compression device 106 in an up and down direction so as to be adjusted to have a required thickness and density. The compression device 106 is configured to read the first code 18 using a sensor provided near the feed roller 104 and the amount of the electrode sheet 15 conveyed. The compression device 106 judges that the first code 18 has reached the compression device 106 when the transfer distance of the first code 18 that is read by the sensor near the feed roller 104 reaches a predetermined distance. At that time, the compression device 106 acquires the identifying information of the first code 18 from that sensor. The compression device 106 may also include, for example, an encoder that measures the transfer distance of the electrode sheet 15. The compression device 106 includes a pair of pressure rollers 106a and 106b. The electrode sheet 15 is sandwiched by the pair of pressure rollers 106a and 106b. The active material layer 17 is rolled by being passed through the gap between the pair of pressure rollers 106a and 106b, so that the active material layer 17 is compressed. The pair of pressure rollers 106a and 106b are connected respectively to press cylinders (not shown) that are capable of being raised and lowered. By raising and lowering the press cylinders, the gap between the pair of pressure rollers 106a and 106b is changed. The length of the gap between the pair of pressure rollers 106a and 106b, the linear load applied by the pair of pressure rollers 106a and 106b to the electrode sheet 15, and the speed of the electrode sheet 15 that passes through the pair of pressure rollers 106a and 106b, i.e., the rotational speed of the pair of pressure rollers 106a and 106b, are controlled by the controller 200. The compression device 106 associates the read identifying information of the first code 18 and the information of the just-mentioned control conditions with each other and transmits them to the controller 200.

### Second Inspection Device 107

The second testing device 107 is identical to the first inspection device 105 except that it is disposed downstream of the compression device 106. Herein, the detailed description thereof is omitted. The information of the results of the inspection on the active material layer 17 carried out by the first inspection device 105 or the second inspection device 107 is referred to as "inspection information". The first inspection device 105 and the second inspection device 107 are examples of the inspection device of the present invention.

### Cut-in-half Device 108

The cut-in-half device 108 is a device that cuts the electrode sheet 15 conveyed by the conveyor device 150 at a widthwise central part, which is also referred to as a slitter. The cut-in-half device 108 transmits a slit width, which is the distance from one end of the electrode sheet 15 to the widthwise center with respect to the widthwise direction of the electrode sheet 15, to the controller 200. One of the electrode sheet 15 that is cut in half and the other one of the electrode sheet 15 pass through the cutting device 109 and thereafter are respectively taken up to different winding rollers 111.

### Cutting Device 109

The cutting device 109 is a device that performs tab cutting of the electrode sheet 15 from the foremost end of the longitudinal axis of the electrode sheet 15. The cutting device 109 is an example of the tab cutting device of the present invention. In the present embodiment, the cutting device 109 performs cutting with the use of laser light. The cutting device 109 is configured to perform tab cutting after reading the first code 18. Note that the method in which the cutting device 109 reads the first code 18 is the same as that of the compression device 106. The cutting device 109 transmits the conditions for performing the tab cutting along with the identifying information of the first code 18 to the controller 200. The conditions for the tab cutting include, for example, the level of output power of the laser light and the like. The electrode sheet 15 is passed through the cutting device 109, whereby the positive electrode sheet 21 or the negative electrode sheet 22 is produced.

### Second Laser Imprinting Device 110

The second laser imprinting device 110 is a device that forms a second code 19 on the electrode sheet 15 that has undergone the tab cutting. The second laser imprinting device 110 is an example of the second identifier affixing device. The method in which the second laser imprinting device 110 affixes the second code 19 is the same as that of the first laser imprinting device 101, so further description will not be provided here.

### Controller 200

The controller 200 may be, for example, a microcomputer. The controller 200 includes a communication interface, a central processing unit (CPU), a read only memory (ROM), and a random access memory (RAM), for example. The controller 200 is connected to the various devices of the electricity storage device manufacturing apparatus 1, such as the first laser imprinting device 101, the coating device 102, the first inspection device 105, the compression device 106, the second inspection device 107, the cut-in-half device 108, the cutting device 109, the second laser imprinting device 110, and the conveyor device 150, and is configured to be able to control these devices.

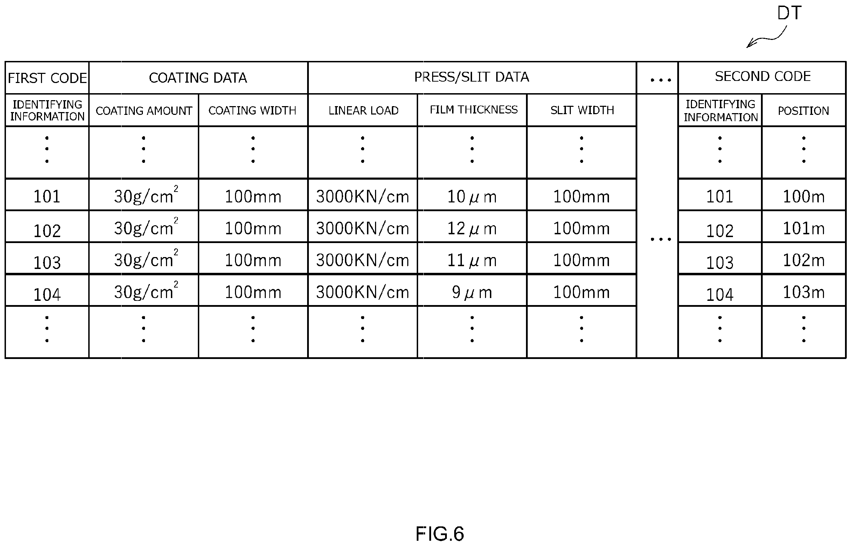

The controller 200 includes a recording device 210. The recording device 210 records the identifying information of the first code 18 and the inspection information in association with each other. In addition, the recording device 210 stores the identifying information of the second code 19 and the position in the current collector 16 at which the second code 19 is affixed, in association with each other. The recording device 210 is, for example, a hard disk drive, that records information. The recording device 210 records information associated with the identifying information of the first codes 18, that is transmitted by the various devices connected to the controller 200, for each identifying information, to construct a database. Fig. 6 is a view illustrating an example of a database DT built by a recording device 210. The configuration of the recording device 210 is not limited to any particular configuration. The recording device 210 may be an external server device, such as a cloud server.

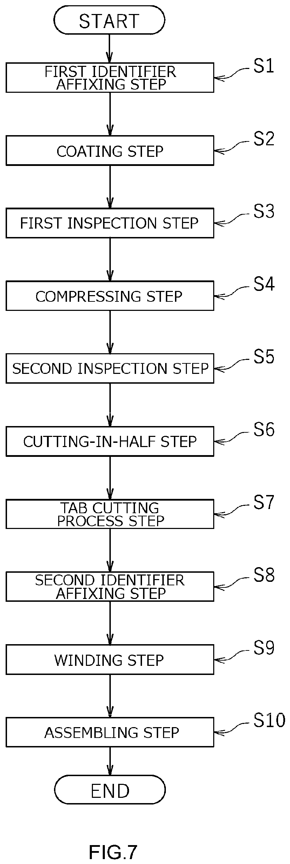

Hereinabove, an example of the electricity storage device manufacturing apparatus 1 has been described. Next, a method of manufacturing a lithium-ion secondary battery 10 will be described. Fig. 7 is a flowchart illustrating a method of manufacturing a lithium-ion secondary battery 10. The method of manufacturing a lithium-ion secondary battery 10 disclosed herein includes a first identifier affixing step S1, a coating step S2, a first inspection step S3, a compressing step S4, a second inspection step S5, a cutting-in-half step S6, a tab cutting process step S7, a second identifier affixing step S8, a winding step S9, and an assembling step S10.

In the first identifier affixing step S1, first codes 18 are affixed to the electrode sheet 15 that is wound out from the feed roller 100. The first codes 18 are formed by the first laser imprinting device 101. The first laser imprinting device 101 assigns identifying information to each of the first codes 18 when forming the first code 18. At this time, the controller 200 causes a database DT retained by the recording device 210 to record the identifying information.

In the coating step S2 shown in Fig. 7, the coating device 102 forms an active material layer 17 on the current collector 16. The coating device 102 performs coating of the electrode mixture slurry while reading the first code 18 and identifying the position thereof. The conditions of the coating at that time are controlled by the controller 200. The coating device 102 associates the identifying information of the first code 18 and the coating conditions at that position with each other and transmits them to the controller 200. The controller 200 associates the conditions of the coating with the identifying information of the first code 18, which is record in the database DT (see Fig. 6) and records them.

Subsequent to the coating step S2, the electrode sheet 15 is taken up onto the winding roller 103 and is moved to the feed roller 104. The method of moving the electrode sheet 15 that has been taken up on the winding roller 103 is not particularly limited, but it is possible that the electrode sheet 15 may be conveyed to the feed roller 104 by a worker. The conveyed electrode sheet 15 is wound out from the feed roller 104.

The first inspection step S3 involves recording inspection information about a condition of the active material layer 17 that has been inspected while identifying a position in the strip-shaped current collector 16, in association with the first code 18. In this embodiment, the first inspection device 105 measures the width and in-line film thickness of the active material layer 17, and the first inspection device 105 sends the width and in-line film thickness of the active material layer 17 that are at the longitudinal position where the first code 18 is affixed in association with the identifying information of the first code 18, to the controller 200. The controller 200 is configured to record the width and in-line film thickness of the active material layer 17 that are at the longitudinal position where the first code 18 is affixed, in association with the identifying information of the first code 18, in the database DT.

In the compressing step S4, the active material layer 17 is compressed by the compression device 106. The compression device 106 compresses the active material layer 17 after reading the identifying information of the first code 18 that is at the location to be compressed. The compression device 106 recognizes that the amount of the electrode sheet 15 conveyed has reached a predetermined distance after the first code 18 was read by the sensor provided near the feed roller 104, and acquires the identifying information of the first code 18 from the just-mentioned sensor. The compression device 106 compresses the active material layer 17 while the pair of pressure rollers 106a and 106b being controlled under predetermined conditions. The coating device 106 associates the read identifying information of the first code 18 and the conditions for the compression at that position with each other, and transmits them to the controller 200. The compression device 106 transmits a linear load value, for example, to the controller 200.

The second testing step S5 involves recording inspection information about a condition of the active material layer 17 that has been inspected while identifying a position in the strip-shaped current collector 16, in association with the first code 18. In this embodiment, the second inspection device 107 measures the width and in-line film thickness of the active material layer 17, and the second inspection device 107 sends the width and in-line film thickness of the active material layer 17 that are at the longitudinal position where the first code 18 is affixed in association with the identifying information of the first code 18, to the controller 200. The controller 200 is configured to record the width and in-line film thickness of the active material layer 17 that are at the longitudinal position where the first code 18 is affixed, in association with the identifying information of the first code 18, in the database DT.

In the cutting-in-half step S6, the electrode sheet 15 is cut at the widthwise central part thereof by the cut-in-half device 108. At this time, the cut-in-half device 108 transmits the condition of the slit width to the controller 200.

In the tab cutting process step S7, the cutting device 109 performs tab cutting for the electrode sheet 15. The cutting device 109 reads the identifying information of the first code 18 imprinted on the tab formation region 16aa to which tab cutting is to be performed, and performs tab cutting while identifying its position. In other words, the tab cutting is carried out while identifying the longitudinal position in the electrode sheet 15. The method in which the cutting device 109 acquires the identifying information of the first code 18 is the same as that in the compressing step S4. The cutting device 109 associates the read identifying information of the first code 18 and the conditions for cutting with each other and transmits them to the controller 200. The conditions for cutting include, for example, the level of output power of the laser light and the like. Note that the code imprinting region 16ab is cut away by the tab cutting, and is discarded.

The second identifier affixing step S8 involves affixing second codes 19 to the tabs formed in the tab cutting process step S7. In the case where the sheet to be formed is a positive electrode sheet 21, the second codes 19 are affixed to the tabs 21t (see Fig. 2). In the case where the sheet to be formed is a negative electrode sheet 22, the second codes 19 are affixed to the locations corresponding to the tabs 22t (see Fig. 2). The method of affixing the second codes 19 is effected by, for example, laser light, as with the first code 18. The database DT stores the identifying information of the second code 19 and the position in the current collector 16, in association with each other. For example, the database DT stores a number that is the identifying information and a distance from the foremost end of the longitudinal axis of the current collector 16 to the second code 19 in association with each other.

The winding step S9 involves, as illustrated in Fig. 3, stacking the positive electrode sheet 21 and the negative electrode sheet 22 that have undergone the tab cutting process on each other with the separator sheets 31 and 32 interposed therebetween, and winding them together. As a result, an electrode assembly 20 is prepared. In this case, the winding device may read the second code 19 formed on the tab 22t of the positive electrode sheet 21 and the tab 22t of the negative electrode sheet 22. This makes it possible to retrospectively acquire the inspection information of the active material layer 17 along the longitudinal axis of the positive electrode sheet 21 and the negative electrode sheet 22 contained in the electrode assembly 20 through the second code 19, even after the winding step S9.

In the assembling step S10 shown in Fig. 7, the electrode assembly 20 is encased and sealed in the battery case 41 in a known manner. In addition, the assembling step S10 may be configured to read a unique number assigned to the battery case 41. The read unique number is sent to the controller 200. The controller 200 is configured to record the unique number in association with the second code 19 contained in the electrode assembly 20 encased in the battery case 41 in the database DT. The assembling device associates the unique number and the identification number of the second code 19 with each other and encases the electrode assembly 20 into the battery case 41. When the electrode assembly 20 is encased and sealed in the battery case 41, filling of the electrolyte solution, initial charging, and an aging process are carried out. Here, in the filling of the electrolyte solution and the initial charging, the amount of electrolyte solution to be filled and the initial charging time period are calculated according to the respective information data recorded in the database DT in association with the identifying information of the first code 18. For example, when the measurement value of the film thickness is relatively greater, the amount of the electrolyte solution that can be absorbed by the electrode assembly 20 is accordingly greater, so the amount of electrolyte solution to be filled may be set greater. For example, when the film density is relatively greater, the electrode assembly 20 is less easy to absorb the electrolyte solution, so the amount of electrolyte solution to be filled may be increased. Note that the amount of the electrolyte solution to be filled may be determined by a worker while the worker is watching the inspection information in the database DT, or may be calculated automatically by the controller 200 using the inspection information in the database DT. The aging process may be carried out in a known manner.

It should be noted that the flow of manufacture of the lithium-ion secondary battery is not limited to the foregoing order. For example, it is also possible that winding of the electrode sheet 15 may be performed after the cutting-in-half step but before performing the tab cutting process step. In this case, the tab cutting process and the affixing of the second code 19 are performed while unwinding the electrode sheet 15 that has been cut in half, followed by the assembling step.

Moreover, the position at which the second code 19 is to be affixed is not limited to the tabs 21t or 22t. The second code 19 may be affixed to an outside portion of the wound electrode assembly 20. Alternatively, the second code 19 may be affixed to an outside when the lithium-ion secondary battery 10 is assembled.

As described above, in the foregoing embodiment, the first codes 18 are formed at regular intervals in the uncoated region 16a along the longitudinal axis of the current collector 16. In the first inspection step S3 and the second inspection step S5, the inspection information of the active material layer 17 is recorded in the recording device 210 while identifying the longitudinal position in the current collector 16 using the first code 18. This allows the database DT of the recording device 210 to record the inspection information of the active material layer 17 at respective positions in the current collector 16 in association with the identifying information. It is possible to retrospectively identify the inspection information of the active material layer 17 corresponding the position at which the first code 18 is affixed, which makes it possible to predict or retrospectively identify individual differences between the electrode materials used for the cells.

In the foregoing embodiment, the sensor provided near the feed roller 104 and the amount of the electrode sheet 15 conveyed are used to acquire the identifying information of the first code 18, and thereafter, the tab cutting is carried out. The second codes 19 are affixed at predetermined positions in the tabs 21t or 22t that have been formed in the tab cutting process step. In this case, it is possible to acquire the information associated with the first code 18 through the identifying information of the second code 19. This makes it possible to retrospectively acquire the inspection information of the active material layer 17 along the longitudinal axis of the positive electrode sheet 21 and the negative electrode sheet 22 having undergone the tab cutting through the identifying information of the second code 19.

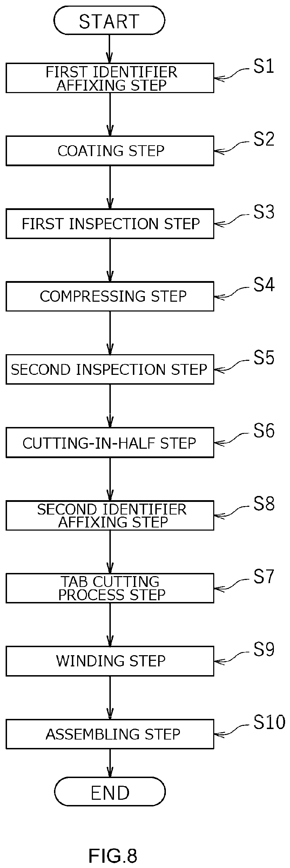

It should be noted that the second codes 19 may be affixed before the tab cutting. Fig. 8 is a flowchart illustrating another method of manufacturing the lithium-ion secondary battery 10, in a different order from that of the flowchart shown in Fig. 7. The steps S1 to S6, S9, and S10 are respectively the same as those shown in the flowchart of Fig. 7. As illustrated in Fig. 8, the second identifier affixing step S8 may be performed before the tab cutting process step S7. Specifically, after the second codes 19 are affixed, the tab 21t and the tab 22t are formed by the tab cutting. At this time, it is possible that, after the first code 18 and the second code 19 are read, the first code 18 and the second code 19 may be stored in association with each other in accordance with positions in the positive electrode sheet 21 and the negative electrode sheet 22 along the longitudinal axis. In this case as well, it is possible to acquire the inspection information of the active material layer 17 along the longitudinal axis of the positive electrode sheet 21 and the negative electrode sheet 22 having undergone the tab cutting, which is associated with the first code 18, through the identifying information of the second code 19, after the tab cutting is performed.

In the foregoing embodiment, the method of manufacturing a lithium-ion secondary battery 10 further includes a winding step of winding the positive electrode sheet 21 and the negative electrode sheet 22 that have undergone the tab cutting process while reading the second code 19. In this case, it is possible to acquire the inspection information of the active material layer 17 corresponding to the position of the long strip-shaped positive electrode sheet 21 and the long strip-shaped negative electrode sheet 22 at which the first code 18 is affixed, through the identifying information of the second code 19 from the electrode assembly 20. This makes it possible to retrospectively acquire the inspection information of the active material layer 17 along the longitudinal axis of the positive electrode sheet 21 and the negative electrode sheet 22 contained in the electrode assembly 20.

In the foregoing embodiment, the method of manufacturing a lithium-ion secondary battery 10 further includes a step of encasing the wound electrode assembly 20 into the battery case 41, a step of acquiring a unique number assigned to the battery case 41, and a step of recording, in the recording device 210, the unique number and the second code 19 of the electrode assembly 20 encased in the battery case 41 in association with each other. In this case, it is possible to acquire the identifying information of the second code 19 of the electrode assembly 20 encased in the battery case 41 through the unique number of the battery case 41. Furthermore, it is possible to acquire the inspection information of the active material layer 17 corresponding to the position of the long strip-shaped positive electrode sheet 21 and the long strip-shaped negative electrode sheet 22 at which the first code 18 is affixed, through the identifying information of the second code 19. Therefore, after the electrode assembly 20 is encased in the battery case 41, the inspection information of the active material layer 17 along the longitudinal axis of the positive electrode sheet 21 and the negative electrode sheet 22 contained in the electrode assembly 20 can be acquired through the unique number of the battery case 41.

In the foregoing embodiment, the method of manufacturing a lithium-ion secondary battery 10 further includes a step of encasing the wound electrode assembly 20 into the battery case 41 and a step of determining the amount of the electrolyte solution to be filled and the initial charging time period based on information recorded in association with the identifying information of the first code 18. For example, the required amount of electrolyte solution and the optimum length of initial charging time period change depending on, for example, the thickness of the film formed in the electrode assembly 20 when coating. The product quality of the manufactured lithium-ion secondary battery 10 can be maintained by determining the amount of the electrolyte solution to be filled and the initial charging time period based on the information recorded in association with the identifying information of the first code 18.

In the foregoing embodiment, the database DT included in the recording device 210 records the identifying information of the first codes 18 and the results of the inspection performed by the first inspection device 105 and the second inspection device 107 in association with each other. By reading the first code 18, it is possible to identify the position in the current collector 16 regarding the positive electrode current collector 21a and the negative electrode current collector 22a, which are used for the electrode assembly 20, making it possible to acquire the inspection information of the active material layer 17 at that position.

In the foregoing embodiment, the second codes 19 are formed on the tabs 21t and the tabs 22t. The second codes 19 each contains identifying information. The identifying information of the second code 19 is recorded in the database DT included in the recording device 210. By reading the second code 19 when forming the electrode assembly 20, it is possible to verify the position of the active material layer 17 contained in the electrode assembly 20, in the current collector 16. By verifying the position of the active material layer 17 contained in the electrode assembly 20, it is possible to acquire the inspection information of the active material layer 17 at that position.

In the foregoing embodiment, the database DT included in the recording device 210 records the identifying information retained by the second code 19 and the inspection information of the active material layer 17 at that position in association with each other. In addition, unlike the code imprinting region 16ab, the tabs 21t and 22t, on which the second codes 19 are formed, are portions of the electrode assembly 20. Therefore, by reading the second code 19 contained in the electrode assembly 20, it is possible to identify the position of the positive electrode current collector 21a and the negative electrode current collector 22a, which are used for the electrode assembly 20, in the current collector 16, making it possible to acquire the inspection information of the active material layer 17 at that position. For example, the inspection information can be used to estimate the amount of the electrolyte solution to be filled in the lithium-ion secondary battery 10 and the initial charging time period.

In the foregoing embodiment, the database DT included in the recording device 210 records the identification numbers retained by the second codes 19 and the unique numbers of the battery cases 41 in association with each other. Therefore, by reading the unique number of the battery case 41, it is possible to identify the electrode assembly 20 encased in the battery case 41.

In the foregoing embodiment, the database DT included in the recording device 210 records the identification number retained by the second code 19, the position in the current collector, and the inspection information of the active material layer 17 at that position, in association with each other. Therefore, by reading the unique number of the battery case 41, it is possible to identify the identification number associated with the just-mentioned unique number, and further, from the identified identification number, it is possible to identify the position in the strip-shaped current collector 16 and the inspection information of the active material layer 17 at that position.

In the foregoing embodiment, the unique number is affixed to the battery case 41, but this is merely exemplary. The unique number may be affixed to the sealing plate 41b. In this case, the unique numbers and the second codes 19 are recorded in association with each other in the recording device 210, as in the foregoing embodiment. Therefore, it is possible to acquire the identifying information of the second code 19 of the electrode assembly 20 41 through the unique number of the sealing plate 41b. Furthermore, it is possible to acquire the inspection information of the active material layer 17 corresponding to the position of the long strip-shaped positive electrode sheet 21 and the long strip-shaped negative electrode sheet 22 at which the first code 18 is affixed, through the identifying information of the second code 19. Therefore, after the electrode assembly 20 is encased in the battery case 41, the inspection information of the active material layer 17 along the longitudinal axis of the positive electrode sheet 21 and the negative electrode sheet 22 contained in the electrode assembly 20 can be acquired through the unique number of the sealing plate 41b.

The inspection information contained in the above-described database DT is not limited to the above-described examples. The information contained in the database DT may also include such information as the specific gravity of the electrode mixture slurry, the width of the coating, and the like. In addition, the database DT may also contain lot numbers of the current collectors 16 to be used or the like.

In the foregoing embodiment, the first codes 18 and the second codes 19 are formed in the electrode sheet 15, but this is merely exemplary. Only one of the first codes 18 or the second codes 19 may be formed in the electrode sheet 15.

In the embodiment shown in Fig. 5, the electricity storage device manufacturing apparatus 1 includes the first inspection device 105 and the second inspection device 107 that are disposed before and after (upstream and downstream of) the compression device 106, but such an embodiment is merely illustrative. For example, the inspection device may be such as to inspect the active material layer 17 after compression by the compression device 106. In other words, the electricity storage device manufacturing apparatus 1 may not include the first inspection device 105 but may include the second inspection device 107.

Various embodiments of the invention have been described hereinabove according to the present disclosure. Unless specifically stated otherwise, the embodiments described herein do not limit the scope of the present invention. It should be noted that various other modifications and alterations may be possible in the embodiments of the invention disclosed herein. In addition, the features, structures, or steps described herein may be omitted as appropriate, or may be combined in any suitable combinations, unless specifically stated otherwise.

In the foregoing embodiment, the identifying information of the first code 18 is acquired using the sensor disposed near the feed roller 104 and the amount of the electrode sheet 15 conveyed. However, it is also possible that the cutting device 109 may also be provided with a sensor that reads the first codes 18. The tab cutting is performed while the electrode sheet 15 is being conveyed. Here, the electrode sheet 15 may in some cases break at the time of tab cutting. At this time, a pass line is set while conveying the electrode sheet 15 at a relatively low speed. In order to identify the position of the electrode sheet 15 at the time of setting the pass line, the sensor provided in the cutting device 109 may be used to read the first codes 18.

As has been described above, the present description contains the disclosure as set forth in the following items.
Item 1: A method of manufacturing an electricity storage device, including:
   a step of affixing, at a predetermined interval to an uncoated region of a strip-shaped current collector, first identifiers each for identifying a position in the strip-shaped current collector, the uncoated region predefined along a longitudinal axis of the strip-shaped current collector;
   a step of forming an active material layer on a portion of the strip-shaped current collector that is other than the uncoated portion; and
   an inspection step of recording, in association with each of the first identifiers, inspection information indicative of a condition of the active material layer while identifying a position in the strip-shaped current collector.
Item 2: The method of manufacturing an electricity storage device according to item 1, further including:
   a tab cutting process step of performing tab cutting in the uncoated region while reading the first identifiers on the strip-shaped current collector to identify the position in the strip-shaped current collector; and
   a step of affixing a second identifier to a predetermined position of a tab formed in the tab cutting process step.
Item 3: The method of manufacturing an electricity storage device according to item 1, further including:
   a second identifier affixing step of affixing a second identifier to a region of the uncoated region in which a tab is formed by tab cutting; and
   a tab cutting process step of performing the tab cutting in the uncoated region in which the second identifier is affixed.
Item 4: The method of manufacturing an electricity storage device according to item 2 or 3, further including a winding step including reading the second identifier and winding the strip-shaped current collector that has undergone the tab cutting process.
Item 5: The method of manufacturing an electricity storage device according to item 4, further including:
   a step of encasing an electrode assembly obtained in the winding step into a battery case while reading the second identifier of the electrode assembly;
   a step of acquiring a unique number affixed to the battery case; and
   a step of recording the unique number of the battery case and the second identifier of the electrode assembly encased in the battery case in association with each other.
Item 6: The method of manufacturing an electricity storage device according to item 4, further including:
   a step of encasing an electrode assembly obtained in the winding step into a battery case including an opening while reading the second identifier of the electrode assembly;
   a step of sealing the opening by a sealing plate to which a unique number is affixed;
   a step of acquiring the unique number affixed to the sealing plate; and
   a step of recording the unique number of the sealing plate and the second identifier of the electrode assembly encased in the battery case in association with each other.
Item 7: The method of manufacturing an electricity storage device according to item 4, further including:
   a step of encasing an electrode assembly obtained in the winding step into a battery case while reading the second identifier of the electrode assembly; and
   a step of determining an amount of an electrolyte solution to be filled and an initial charging time period based on information recorded in association with each of the first identifiers.
Item 8: A recording device configured to record, in association with each other:
   a first identifier for identifying a position in a strip-shaped current collector, the first identifier affixed at a predetermined interval to an uncoated region of the strip-shaped current collector, the uncoated region predefined along a longitudinal axis of the strip-shaped current collector; and
   inspection information on an active material layer formed on the strip-shaped current collector while identifying a position in the strip-shaped current collector in association with each of the first identifiers.
Item 9: The recording device according to item 8, configured to further record, in association with each other, a second identifier affixed to a predetermined position of a tab formed in the uncoated region of the strip-shaped current collector and a position in the strip-shaped current collector to which the second identifier is affixed.
Item 10: The recording device according to item 9, configured to acquire inspection information on the strip-shaped current collector and the active material layer that is at a position in the current collector along a longitudinal axis thereof, based on the second identifier.
Item 11: The recording device according to item 8, configured to further record, in association with each other:
   a second identifier affixed to a tab of an electrode assembly prepared from the strip-shaped current collector; and
   a unique number affixed to a battery case enclosing the electrode assembly.
Item 12: The recording device according to item 11, configured to be able to acquire a position in the strip-shaped current collector used in the electrode assembly encased in the battery case, and inspection information on the active material layer at the position, based on the unique number of the battery case.
Item 13: An electricity storage device manufacturing apparatus, including:
   a first identifier affixing device affixing, at a predetermined interval to an uncoated region of a strip-shaped current collector, first identifiers each for identifying a position in the strip-shaped current collector, the uncoated region predefined along a longitudinal axis of the strip-shaped current collector;
   an active material layer formation device forming an active material layer on a portion of the strip-shaped current collector that is other than the uncoated portion;
   an inspection device inspecting a condition of the active material layer while identifying a position in the strip-shaped current collector in association with each of the first identifiers; and
   a recording device recording inspection information obtained by the inspection device.
Item 14: The electricity storage device manufacturing apparatus according to item 13, further including:
   a tab cutting device performing tab cutting in the uncoated region while reading the first identifiers on the strip-shaped current collector to identify the position in the strip-shaped current collector; and
   a second identifier affixing device affixing a second identifier to a predetermined position of a tab formed by the tab cutting device.
Item 15: The electricity storage device manufacturing apparatus according to item 13, further including:
   a second identifier affixing device affixing a second identifier to a region of the uncoated region in which a tab is formed by tab cutting; and
   a tab cutting device performing the tab cutting for the uncoated region in which the second identifier is affixed by the second identifier affixing device.

## Claims

1. A method of manufacturing an electricity storage device (10), comprising:
a step of affixing(S1), at a predetermined interval to an uncoated region (16a) of a strip-shaped current collector (16), first identifiers (18) each for identifying a position in the strip-shaped current collector (16), the uncoated region (16a) predefined along a longitudinal axis of the strip-shaped current collector (16);
a step of forming(S2) an active material layer (17) on a portion of the strip-shaped current collector (16) that is other than the uncoated portion; and
an inspection step of recording(S3,S5), in association with each of the first identifiers (18), inspection information indicative of a condition of the active material layer (17) while identifying a position in the strip-shaped current collector (16).

2. The method of manufacturing an electricity storage device (10) according to claim 1, further comprising:
a tab cutting process step (S7) of performing tab cutting in the uncoated region (16a) while reading first identifiers (18) on the strip-shaped current collector (16) to identify the position in the strip-shaped current collector (16); and
a step of affixing a second identifier (19) to a predetermined position of a tab (21t,22t) formed in the tab cutting process step (S7).

3. The method of manufacturing an electricity storage device (10) according to claim 1, further comprising:
a second identifier (19) affixing step of affixing a second identifier (19) to a region of the uncoated region (16a) in which a tab (21t,22t) is formed by tab cutting; and
a tab cutting process (S7) step of performing the tab cutting in the uncoated region (16a) in which the second identifier (19) is affixed.

4. The method of manufacturing an electricity storage device (10) according to claim 2 or 3, further comprising a winding step (S9) including reading the second identifier (19) and winding the strip-shaped current collector (16). that has undergone the tab cutting.

5. The method of manufacturing an electricity storage device (10) according to claim 4, further comprising:
a step of encasing an electrode assembly (20) obtained in the winding step (S9) into a battery case (41) while reading the second identifier (19) of the electrode assembly (20);
a step of acquiring a unique number affixed to the battery case (41); and
a step of recording the unique number of the battery case (41) and the second identifier (19) of the electrode assembly (20) encased in the battery case (41) in association with each other.

6. The method of manufacturing an electricity storage device (10) according to claim 4, further comprising:
a step of encasing an electrode assembly (20) obtained in the winding step (S9) into a battery case (41) including an opening (41a1) while reading the second identifier (19) of the electrode assembly (20);
a step of sealing the opening (41a1) by a sealing plate (41b) to which a unique number is affixed;
a step of acquiring the unique number affixed to the sealing plate (41b); and
a step of recording the unique number of the sealing plate (41b) and the second identifier (19) of the electrode assembly (20) encased in the battery case (41) in association with each other.

7. The method of manufacturing an electricity storage device (10) according to claim 4, further comprising:
a step of encasing an electrode assembly (20) obtained in the winding step (S9) into a battery case (41) while reading the second identifier (19) of the electrode assembly (20); and
a step of determining an amount of an electrolyte solution to be filled and an initial charging time period based on information recorded in association with each of the first identifiers (18).

8. A recording device (210) configured to record, in association with each other:
a first identifier (18) for identifying a position in a strip-shaped current collector (16), the first identifier (18) affixed at a predetermined interval to an uncoated region (16a) of the strip-shaped current collector (16), the uncoated region (16a) predefined along a longitudinal axis of the strip-shaped current collector (16); and
inspection information on an active material layer (17) formed on the strip-shaped current collector (16) while identifying a position in the strip-shaped current collector (16) in association with each of the first identifiers (18).

9. The recording device (210) according to claim 8, configured to further record, in association with each other, a second identifier (19) affixed to a predetermined position of a tab (21t,22t) formed in the uncoated region (16a) of the strip-shaped current collector (16), and a position in the strip-shaped current collector (16) to which the second identifier (19) is affixed.

10. The recording device (210) according to claim 9, configured to acquire the position in the strip-shaped current collector (16), and inspection information on the active material layer (17) that is at a position in the current collector along a longitudinal axis thereof, based on the second identifier (19).

11. The recording device (210) according to claim 8, configured to further record, in association with each other:
a second identifier (19) affixed to a tab (21t,22t) of an electrode assembly (20) prepared from the strip-shaped current collector (16); and
a unique number affixed to a battery case (41) enclosing the electrode assembly (20).

12. The recording device (210) according to claim 11, configured to be able to acquire a position in the strip-shaped current collector (16) used in the electrode assembly (20) encased in the battery case (41), and inspection information on the active material layer (17) at the position, based on the unique number of the battery case (41).

13. An electricity storage device manufacturing apparatus (1), comprising:
a first identifier affixing device (101) affixing, at a predetermined interval on an uncoated region (16a) of a strip-shaped current collector (16), first identifiers (18) each for identifying a position in the strip-shaped current collector (16), the uncoated region (16a) predefined along a longitudinal axis of the strip-shaped current collector (16);
an active material layer formation device (102) forming an active material layer (17) on a portion of the strip-shaped current collector (16) that is other than the uncoated portion;
an inspection device (105,107) inspecting a condition of the active material layer (17) while identifying a position in the strip-shaped current collector (16) in association with each of the first identifiers (18); and
a recording device (210) recording inspection information obtained by the inspection device (105,107).

14. The electricity storage device manufacturing apparatus (1) according to claim 13, further comprising:
a tab cutting device (109) performing tab cutting in the uncoated region (16a) while reading the first identifiers (18) on the strip-shaped current collector (16) to identify the position in the strip-shaped current collector (16); and
a second identifier affixing device (110) affixing a second identifier (19) to a predetermined position of a tab (21t,22t) formed by the tab cutting device (109).

15. The electricity storage device manufacturing apparatus (1) according to claim 13, further comprising:
a second identifier affixing device (110) affixing a second identifier (19) to a region of the uncoated region (16a) in which a tab (21t,22t) is formed by tab cutting; and
a tab cutting device (109) performing the tab cutting for the uncoated region (16a) in which the second identifier (19) is affixed by the second identifier affixing device (110).
